# EUROPÄISCHE PATENTANMELDUNG

(11) **EP 0 679 489 A2**
(43) Veröffentlichungstag der Anmeldung: **02.11.1995**
(21) Anmeldenummer: 94113663.2
(22) Anmeldetag: 01.09.1994
(51) Int. Cl.: B29C 45/14, B29C 45/06, A01G 17/14

(54) **Stabförmiger Gegenstand sowie Verfahren und Vorrichtung zur Herstellung von verrottungsfesten Gegenständen**

(30) Priorität: 25.04.1994 DE 9406874 U; 14.05.1994 DE 4417018
(71) Anmelder: Rydmann, Theo, D-67310 Hettenleidelheim (DE)
(72) Erfinder: Rydmann, Theo, D-67310 Hettenleidelheim (DE)
(74) Vertreter: Fuchs, Luderschmidt & Partner Patentanwälte

(57) **Zusammenfassung**

Es wird ein Verfahren zum Herstellen von verrottungsfesten Gegenständen 1 beschrieben, bei dem zumindest ein Teilbereich des Gegenstandes 1 in eine Hohlform 20 eingeschoben wird, die Hohlform 20 im Bereich ihrer Einführöffnung 22 abgedichtet wird, und in dem Zwischenraum zwischen dem Teilbereich und der Hohlform 20 eine Kunststoffschmelze 24 eingepreßt wird. Hierbei wird in der Hohlform 20 der Gegenstand 1 durch eine Gegenkraft nachgiebig gegen den Einpreßdruck der Kunststoffschmelze gehalten. Nach dem Füllen der Hohlform 20 und während der anschließenden Kühlperiode kann der Gegenstand 1 in die Hohlform 20 zurückgedrückt werden, um eine Schrumpfkompensation herbeizuführen. Nach Beendigung der Kühlperiode wird der Gegenstand 1 aus der Hohlform 20 entfernt. Es wird auch die Vorrichtung zur Herstellung derartiger verrottungsfester Gegenstände beschrieben sowie verschiedene Ausführungsformen stabförmiger Gegenstände, die eine Ummantelung 4 aufweisen.

## Beschreibung

Die Erfindung betrifft einen stabförmigen Gegenstand sowie ein Verfahren und eine Vorrichtung zur Herstellung von verrottungsfesten Gegenständen, wie Pfählen, die aus überwiegend verrottbarem Material, wie Holz oder korrodierbaren Metallen, bestehen und die mit einem Teilbereich ins Erdreich oder dergl. oder in ein aggressives Medium eingebracht werden. Die Erfindung bezieht sich auch auf eine mit Formen bestückte Trommel.

Unter stabförmigen Gegenständen werden beispielsweise Pfähle oder Pfeiler verstanden, die für die unterschiedlichsten Zwecke eingesetzt werden können, und die zum Beispiel ins Erdreich eingesetzt werden. Hierzu zählen u.a. Telegraphenmasten oder Holzpfähle, die als Stützen für den Weinbau oder als Stützpfähle für Wildzäune, Schneegitter und vieles mehr eingesetzt werden. Außer aus Holz, können diese stabförmigen Gegenstände auch aus Metall oder Beton bestehen, die insbesondere dann sehr stark angegriffen werden, wenn sie im Meerwasserbereich eingesetzt werden.

Holzpfähle wurden bisher mit chemischen Substanzen behandelt, um Verwitterungs- bzw. Fäulnisschäden, insbesondere an dem im Erdreich befindlichen Teil der Gegenstände zu vermeiden. Es hat sich aber gezeigt, daß diese chemischen Substanzen leicht in den Boden abwandern und denselben schädigen können. Auch bei der Entsorgung unbrauchbarer Pfähle gibt es erhebliche Schwierigkeiten.

Es ist des weiteren bekannt, sogenannte Schuhe aus Kunststoff in den Boden einzuschlagen, in welche dann die Holzpfähle eingesteckt werden. Derartige Schuhe haben sich jedoch noch nicht bewährt, weil es nicht zu vermeiden ist, daß Feuchtigkeit zwischen dem Pfahl und dem Schuh eindringt und der Pfahl verrottet und den festen Sitz im Schuh verliert.

In der DE 38 22 665 A1 ist ein Verfahren zur Herstellung einer Kunststoffummantelung für einen flexiblen Stab offenbart. Der Stab wird hierbei in eine Spritzgußform eingelegt, über den eine auf ihm verschiebbare Zentrierhülse aufgeschoben ist und benachbart zum Anguß gelagert wird. Während des Spritzvorganges wird die Zentrierhülse nach Art eines Lochkolbens auf dem zu ummantelnden Stab durch den Spritzdruck verschoben. Da keine Möglichkeit besteht, leere Stellen, wie diese bei stark verunreinigter Schmelze aus Kunststoffrecycling anfallen, auszugleichen, sind derartig ummantelte Gegenstände nicht witterungsfest. Auch eine glatte und dichte Oberfläche läßt sich nach dem genannten Verfahren mit einer Schmelze aus Recyclingkunststoff nicht erzielen.

In der US 4,738,808 ist eine Vorrichtung zum Spritzen von Gegenständen aus Kunststoffmaterial mit einer Plastifiziereinrichtung zum Aufschmelzen des Kunststoffmaterials, mit mindestens einer Form, die an der Auslaufdüse des Extruders oder Plastifikators angebracht ist, und einer Fördereinrichtung, die die Formen von der Füllstation über eine Abkühlstation in die Entformstation bringt, sowie einem an der hinteren Seite der Form angebrachten Druckgeber offenbart. Mit dieser Vorrichtung werden Gegenstände unmittelbar und zur Gänze hergestellt. Es handelt sich hierbei um kein Ummanteln von Gegenständen, die witterungsfest gemacht werden sollen. Aus Kunststoff gefertigte schlanke Stäbe haben nicht die erforderliche Biegefestigkeit und sind preislich zu teuer.

Des weiteren ist aus der DE-OS 23 43 129 eine Einrichtung zum Spritzen von Schuhsohlen bekannt, die einen Zwischenspeicher aufweist, wobei die Form einseitig mit einer durch ein Absperrorgan verschließbaren Einfüllöffnung versehen ist. Zum Ummanteln von Gegenständen ist diese Einrichtung nicht geeignet und sie gibt auch keinen Hinweis darauf, Gegenstände mit einer glatten und dichten Oberfläche herzustellen.

Aus dem Gebrauchsmuster G 92 09 485 ist es bekannt, Holzpfähle mit Kunststoff zu ummanteln. Damit die Ummantelung am Holz fixiert wird, muß der Pfahl im zu ummantelnden Bereich im Querschnitt zunächst verringert werden und anschließend mit einer sägezahnförmigen Außenkontur versehen werden. Der Nachteil dieser Stäbe oder Pfähle liegt in der aufwendigen Vorbereitung des Ausgangsmaterials, was die Herstellung verteuert.

Aufgabe der Erfindung ist ein Verfahren, mit dem verrottungsfeste Gegenstände auf einfache und kostengünstige Weise hergestellt werden können, ohne daß das Ausgangsmaterial einer aufwendigen Bearbeitung unterzogen werden muß. Es ist auch Aufgabe, solche stabförmigen Gegenstände sowie eine Vorrichtung zur Herstellung verrottungsfester Gegenstände sowie eine Trommel bereitzustellen.

Die Aufgabe wird mit einem Verfahren gelöst, das dadurch gekennzeichnet ist, daß zumindest der in das Erdreich oder in das aggressive Medium einzubringende Teilbereich des Gegenstandes in eine Hohlform eingeschoben wird, daß die Hohlform im Bereich ihrer Einführöffnung abgedichtet wird, daß in dem Zwischenraum zwischen dem Teilbereich und der Hohlform eine Kunststoffschmelze eingepreßt und dabei in der Hohlform der Gegenstand durch eine Gegenkraft nachgiebig gegen den Einpreßdruck der Kunststoffschmelze gehalten wird, und daß die Kunststoffschmelze abgekühlt und nach Beendigung der Kühlperiode der Gegenstand aus der Hohlform entfernt wird. Vorzugsweise wird nach dem Füllen der Hohlform und während der anschließenden Kühlperiode der Gegenstand in die Hohlform zurückgedrückt, um eine Schrumpfkompensation herbeizuführen. Durch die Abstimmung der Gegenkraft auf den Einpreßdruck der Kunststoffschmelze und insbesondere durch das Zurückdrücken des Gegenstandes in die Form, während gleichzeitig das Kunststoffmaterial abgekühlt wird, wird eine Ummantelung erzielt, die eine äußerst feste Bindung zum Ausgangsmaterial des Gegenstandes, wie Holz, Metall oder Beton gewährleistet, ohne daß sägezahnartige Vertiefungen am Ausgangsmaterial angebracht werden müssen, um die Ummantelung zu fixieren. Das erfindungsgemäße Verfahren hat weiterhin den Vorteil, daß die Außenseite des Mantels eine glatte Oberfläche aufweist, was vorzugsweise durch das Zurückdrücken des Gegenstandes während der Kühlperiode erzielt wird. Hohlräume oder dergleichen werden dadurch sicher vermieden. Lunkerstellen oder unvollkommen ausgefüllte Formteile, wie diese bei stark verschmutzter recycelter Kunststoffschmelze vorkommen können, werden dadurch verhindert, daß gleichzeitig ein Ausgleich des Schrumpfwertes durchgeführt wird.

Damit die Kunststoffschmelze nach dem Befüllen und während des Zurückdrückens des Gegenstandes in die Hohlform nicht aus der Hohlform abfließen kann, wird die Eintrittsöffnung der Hohlform vorzugsweise verschlossen.

Wenn die Ummantelung denselben Durchmesser aufweisen soll, wie der nichtummantelte Teilbereich, so ist es erforderlich, daß der in das aggressive Medium einzubringende Teilbereich des Gegenstandes mit einem geringeren Querschnitt ausgeführt wird als der Restbereich des Gegenstandes. In diesen Fällen kann der Gegenstand so weit in die Hohlform eingeschoben werden, daß der Restbereich die Hohlform im Bereich ihrer Einführöffnung abdichtet. Zusätzliche Abdichtmaßnahmen im Bereich der Einführöffnung sind dann nicht erforderlich. Die Querschnittsverringerung ist dann nicht mit einem zusätzlichen Bearbeitungsschritt verbunden, wenn der Gegenstand, wie z.B. ein Stab oder Pfeiler, ebenfalls aus gegossenem Material, wie z.B. aus Beton, besteht. In diesen Fällen kann der verringerte Querschnitt des Gegenstandes beim Formvorgang des Ausgangsmaterials erzeugt werden.

Wenn Gegenstände aus anderen Materialien, wie z.B. Holzpfähle, ummantelt werden sollen, so werden diese in ihrer Gestalt belassen, was dann allerdings eine zusätzliche Abdichtung an der Einführöffnung der Hohlform erforderlich macht. Die Gegenstände werden in der Hohlform in ihrer vorgesehenen Position vorzugsweise durch einen Abdichtring und durch die im Abstand dazu angeordnete Gegendruckeinrichtung gehalten und zentriert. Vorzugsweise wird ein Abdichtring verwendet, an dem beispielsweise eine Hülse angeformt ist, die auf den Durchmesser der Einführöffnung abgestimmt ist.

Vorzugsweise kann die vom Extruder kontinuierlich geförderte Kunststoffschmelze während des Formwechsels in einen Zwischenspeicher gefördert werden, der zwischen Extruder und Hohlform angeordnet ist. Die Extruderdüse ist zu diesem Zweck als Nadelverschlußdüse ausgebildet, so daß diese nach dem Befüllen verschlossen werden kann und die vom Extruder kontinuierlich geförderte Schmelze zwischengespeichert wird. Dies hat den Vorteil, daß die Förderleistung des Extruders nicht unterbrochen bzw. gestoppt werden muß.

Nach der Ankopplung der nächsten leeren Form wird vorzugsweise der Inhalt des Zwischenspeichers zugleich mit der kontinuierlich geförderten Kunststoffschmelze in die mit dem zu ummantelnden Gegenstand bestückte Hohlform gepreßt. Das Füllvolumen der Hohlform wird dadurch schneller erreicht, wodurch eine rationelle Fertigung erzielt wird.

Die Vorrichtung zur Herstellung von verrottungsfesten Gegenständen ist dadurch gekennzeichnet, daß die Hohlform an einer Seite eine Einfüllöffnung und an der anderen Seite ein Einführöffnung zum Einführen des Gegenstandes aufweist und daß gegenüber der Einführöffnung eine Gegendruckeinrichtung angeordnet ist, an der der Gegenstand mit seinem freien Ende anliegt. Die Gegendruckeinrichtung, die vorzugsweise eine Zylinder-Kolben-Einheit sein kann, bewirkt das Hineindrücken des Gegenstandes in die Hohlform, wodurch sich leere Stellen in der Ummantelung ausfüllen und eine feste, dichte Oberfläche erzielt wird. Auch eine eventuell auftretende Schrumpfung während der Kühlperiode läßt sich damit ausgleichen. Vorzugsweise ist ein Absperrorgan vorgesehen, mit dem während des Zurückdrückens des Gegenstandes in die Hohlform der Innenraum der Hohlform abgeschlossen ist. Als Absperrorgan kann ein Schieber oder ein Nadelverschlußventil vorgesehen sein.

Damit die Kunststoffschmelze im Bereich der Einführöffnung nicht aus dem Inneren der Hohlform entweichen kann, ist die Einführöffnung vorzugsweise an die Außenkontur des Gegenstandes angepaßt.

Gemäß einer weiteren Ausführungsform kann vor oder in der Einführöffnung ein ein- oder mehrteiliger Dichtring angeordnet sein, der ggf. mit einer Hülse versehen ist, die an den Durchmesser der Einführöffnung angepaßt ist. Die Hülse, die insbesondere eine Zentrierhülse ist, kann ein separates Bauteil sein oder sie kann an den Dichtring angeformt sein. Der vorzugsweise zweiteilige Dichtring kann gemäß einer bevorzugten Ausführungsform in zwei Klemmbacken gehalten sein, so daß eine Zentrierung des im Dichtring gehaltenen Gegenstandes erreicht wird. Wenn am oberen Ende der Ummantelung eine tellerförmige Platte angeformt werden soll, so befindet sich der Dichtring vor der Einführöffnung. Der Dichtring besitzt eine tellerförmige Ausnehmung, in die das Kunststoffmaterial beim Herausfließen aus der Einführöffnung eindringen kann.

Die erfindungsgemäße Trommel mit zwischen ihren Seitenwänden angeordneten Hohlformen, die zum Befüllen mit Kunststoffschmelze an einem Extruder anschließbar sind und mit einer Antriebseinrichtung zum Drehen der Trommel versehen ist, ist dadurch gekennzeichnet, daß die Trommel allseits geschlossen ist und im Innenraum bis zu einem vorbestimmten Flüssigkeitspegel mit Kühlflüssigkeit angefüllt ist. In dieser Trommel können beliebige Formen angeordnet sein, vorzugsweise jedoch Hohlformen zum Ummanteln von Gegenständen, so daß diese Trommel bevorzugt als Bestandteil der Vorrichtung zur Herstellung verrottungsfester Gegenstände eingesetzt werden kann.

Dadurch wird eine rationelle, kontinuierliche Fertigung erreicht. Vorzugsweise ist die Trommel intermittierend angetrieben. Jeder der Hohlformen ist eine mit der Trommel lösbar verbundene Abdichtscheibe zugeordnet.

Wenn die Trommel gedreht wird, so durchlaufen die einzelnen Hohlformen nacheinander eine Be- und Entladestation, eine Formstation und eine oder mehrere Kühlstationen.

Die Trommel ist einseitig gelagert und in Form eines Fasses allseitig geschlossen. Die andere Seite der Trommel kann durch Stützrollen abgestützt sein. Der geschlossene Innenraum der Trommel kann bis zu einem vorbestimmten Flüssigkeitsspiegel mit Kühlflüssigkeit, vorzugsweise Kühlwasser, angefüllt sein. Der Durchfluß der Kühlflüssigkeit durch die Achse der Trommellagerung kann mittels einer sogenannten Rotorventilaufgabe erfolgen und der Flüssigkeitsspiegel kann durch eine Niveauausgleichseinrichtung von außen konstant gehalten und regulierbar sein.

Die Einfüllöffnungen der Hohlformen sind mit der Seitenwand an der Antriebsseite fest verbunden und an der anderen Seitenwand münden die Hohlformen mit ihrer Einführöffnung. Die Eintüllöffnungen und die Einführöffnungen der Hohlformen sind abgedichtet und mit den Seitenwänden gegebenenfalls verschweißt. Der Innenraum der Trommel ist somit flüssigkeitsdicht und die Hohlformen werden von der Kühlflüssigkeit umspült. Verdunstung und Erwärmung der Kühlflüssigkeit, die bei einem offenen Behälter infolge der großen Oberfläche verhältnismäßig groß ist, sowie Korrosion der Hohlformen kann vermieden werden. Durch den laufenden Durchfluß der Kühlflüssigkeit wird ein wesentlich besserer Kühleffekt erzielt.

Die Austrittsdüse des Extruders kann als Schiebedüse oder Nadelverschlußdüse ausgebildet sein. Diese stellt die Verbindung zur Eintrittsöffnung an der Trommel her. Nach Erreichen des Fülldruckes in der Hohlform sperrt ein Absperrorgan den Zufluß von weiter aufbereiteter Kunststoffschmelze ab und die Verbindung der Austrittsdüse zur Einfüllöffnung wird durch Vorschieben der Nadel in der Nadelverschlußdüse sowie durch einen Schieber an der Eintrittsöffnung der Hohlform unterbrochen. Die kontinuierlich vom Extruder geförderte Kunststoffschmelze kann einem Zwischenspeicher zugeleitet werden und sobald eine neue Hohlform mit der Austrittsdüse verbunden ist, gelangt die gegebenenfalls gespeicherte Kunststoffschmelze durch Entleerung des Zwischenzylinders mit der vom Extruder geförderten Schmelzemenge zum Befüllen der Hohlform. Die Füllstation befindet sich vorzugsweise oberhalb des Kühlwasserspiegels. Dadurch wird erreicht, daß die zu befüllende Hohlform oberhalb des kalten Kühlwassers zum Stillstand bzw. zum Befüllen kommt und damit ein vorzeitiges Einfrieren des einzuspritzenden Kunststoffmaterials weitgehend vermieden werden kann. Nach dem Füllvorgang und bei der nachfolgenden Drehung der Trommel, taucht die gefüllte Hohlform in das Kühlwasser ein und wird dann während des Durchgangs durch die folgenden Stationen durch das Kühlwasser gekühlt.

Der Füllstation kann zusätzlich noch eine Klemmeinrichtung zugeordnet sein, die den zu ummantelnden Gegenstand - gegebenenfalls federnd - fixiert.

Die Kolben-Zylinder-Einheit ist axial und im Abstand zur Hohlform angeordnet. Der zu ummantelnde Gegenstand wird durch den Abdichtring und durch die Kolben-Zylinder-Einheit zur Hohlform zentriert gehalten, wobei die Kolben-Zylinder-Einheit einen Gegendruck zum Fülldruck ausübt. Wenn eine Hohlform ohne Abdichtring verwendet wird, ist die Einführöffnung an die Außenkontur des Gegenstandes angepaßt. In diesem Fall wird der Gegenstand von der Einführöffnung und der Kolben-Zylinder-Einheit gehalten.

Nach Beendigung des Füllvorganges wird der Gegenstand durch die Kolben-Zylinder-Einheit in die gefüllte Form hineingepreßt, wodurch Undichtigkeiten und Lunkerstellen in der Ummantelung beseitigt werden.

Die Be- und Entladestation befindet sich vorzugsweise unterhalb des Kühlwasserspiegels, so daß der Kühlvorgang zeitlich vollständig ausgenutzt werden kann.

Vorzugsweise ist in mindestens einer Kühlstation noch eine Kolben-Zylinder-Einheit vorgesehen, so daß der Druck des Gegenstandes auf die in der Hohlform eingepreßte Kunststoffschmelze bis zur Erstarrung derselben aufrechterhalten werden kann und so eine Schrumpfkompensation herbeigeführt werden kann.

Vorzugsweise ist an dem Abdichtring eine Hülse angeformt. Dadurch wird die Möglichkeit gegeben, mit derselben Hohlform die Länge der Ummantelung am Gegenstand zu variieren.

Der stabförmige Gegenstand, der insbesondere ein Pfahl zum Stabilisieren und Anbringen von Weinreben sein kann, ist dadurch gekennzeichnet, daß der Querschnitt ohne Ummantelung im unteren Teilbereich gleich dem Querschnitt des nicht-ummantelten Bereichs ist, wobei der Gegenstand vorzugsweise in einer Spitze ausläuft oder eine plane Stirnfläche aufweist. Eine vorbereitende Bearbeitung des Stabes ist somit nicht erforderlich. Die Spitze bietet den Vorteil, daß beim Herstellungsvorgang der Stab leicht in die Kunststoffschmelze eingedrückt werden kann. Dadurch wird eine weitaus bessere Verbindung zwischen dem Stab und der Ummantelung erreicht, so daß keine Profilierung des zu ummantelnden Bereiches erforderlich ist. Um das Eindringen von Wasser in einen eventuell vorhandenen Zwischenraum zwischen dem Stab und der Ummantelung sicher zu verhindern, weist der stabförmige Gegenstand am oberen Ende des unteren Teilbereiches eine ringförmige Ausnehmung auf, die mit Kunststoffmaterial angefüllt ist. In diesem Bereich wird dadurch eine zusätzliche Abdichtung erzielt.

Beispielhafte Ausführungsformen werden nachfolgend anhand der Zeichnungen näher erläutert.

Es zeigen:
- Figur 1: einen Pfahl gemäß einer ersten Ausführungsform,
- Figur 2: einen Pfahl gemäß einer zweiten Ausführungsform,
- Figur 3: einen Pfahl gemäß einer dritten Ausführungsform,
- Figuren 4 bis 7: schematische Darstellungen der Vorrichtung zur Herstellung von verrottungsfesten Gegenständen während unterschiedlicher Arbeitsschritte,
- Figur 8: die Seitenansicht der Vorrichtung gemäß einer weiteren Ausführungsform,
- Figur 9: die Draufsicht auf die in der Figur 8 gezeigte Trommel und
- Figur 10: die vergrößerte Schnittdarstellung einer Hohlform gemäß einer weiteren Ausführungsform mit eingesetztem Stab,
- Figur 11: die vergrößerte Schnittdarstellung einer Hohlform gemäß einer weiteren Ausführungsform und
- Figur 12: die Draufsicht auf eine Stirnseite der Trommel.

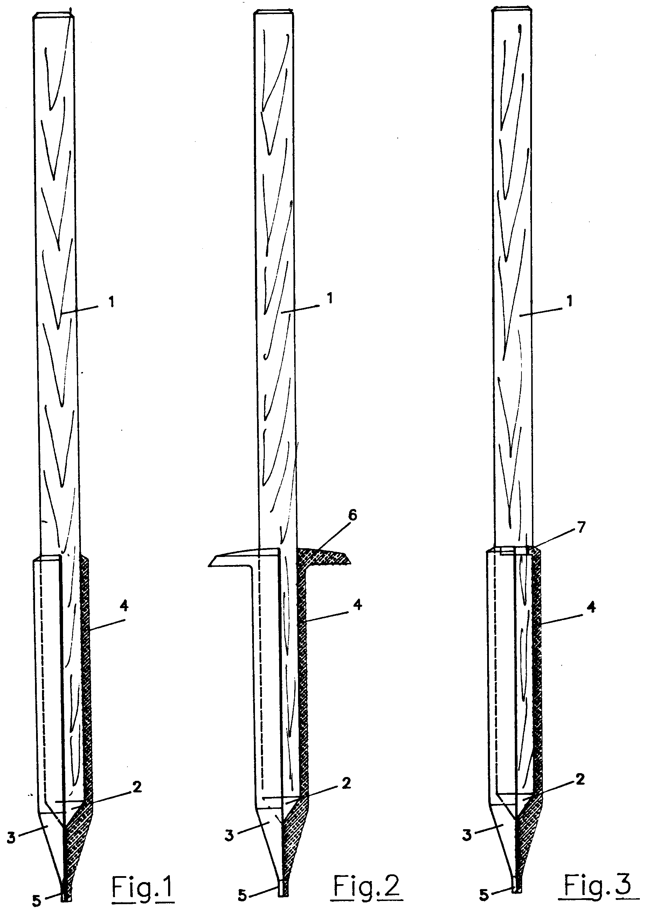

In der Figur 1 ist ein Stütz- oder Stabilisierungpfahl dargestellt, der aus einem handelsüblichem Holzpfahl 1 besteht, der eine Spitze 2 aufweist, die hinsichtlich ihrer kegelförmigen Ausführung ungefähr dem späteren Übergangsbereich 3 der Ummantelung 4 entspricht. Die Ummantelung 4 umschließt den Holzpfahl 1 im unteren Teilbereich, der in das Erdreich eingesteckt werden soll. Aufgrund des erfindungsgemäßen Herstellungsverfahrens weist die Ummantelung 4 eine glatte Oberfläche auf und ist im Inneren weitgehend frei von Hohlräumen oder Lunkerstellen. Die Ummantelung 4 ist fest mit dem Holzpfahl 1 verbunden, so daß auch zwischen Holzpfahl 1 und der Ummantelung 4 keine Flüssigkeit eindringen kann. Als Material für die Ummantelung wird insbesondere Recycling-Kunststoff verwendet. Am unteren Ende besitzt die Ummantelung im Anschluß an den Übergangsbereich 3 eine Spitze 5.

Die Figur 2 zeigt einen Pfahl 1, der zu einer besseren Stabilisierung und zur Verhinderung von Unkrautwuchs in unmittelbarer Nähe des oberen Endes der Ummantelung 4 mit einer entsprechend geformten tellerförmigen Platte 6 versehen ist.

In der Figur 3 ist ein Pfahl 1 dargestellt, der zusätzlich eine ringförmige Ausnehmung 7 am oberen Ende des unteren Teilbereiches aufweist, so daß das Eindringen von Flüssigkeit zwischen Ummantelung 4 und Holzpfahl sicher vermieden werden kann. Diese Ausführungsform eignet sich insbesondere für die Verwendung in besonders aggressivem Umfeld.

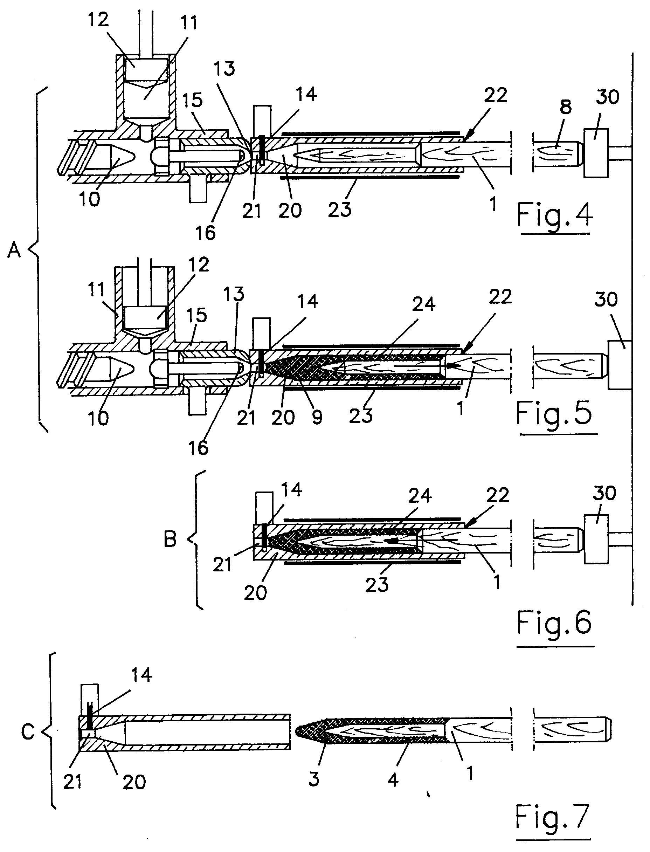

In der Figur 4 ist die Vorrichtung zur Herstellung verrottungsfester Gegenstände schematisch dargestellt. Die Kunststoffschmelze wird in einem Extruder 10 erzeugt und über eine Austrittsdüse 13, die als Nadelverschlußdüse 16 ausgebildet ist, einer Hohlform 20 zugeführt, in der sich bereits ein stabförmiger Gegenstand 1 in Form eines Holzpfahles 1 befindet. Da der Durchmesser der Einführöffnung 22 dem Durchmesser des Holzpfahles 1 entspricht, ist eine zusätzliche Abdichtung in diesem Bereich nicht erforderlich. Mit seinem freien Ende 8 liegt der Holzpfahl 1 an einer Gegendruckeinrichtung 30 an, die aus einer Zylinder-Kolben-Einheit besteht.

In der Förderleitung 15 zwischen dem Extruder 10 und der Austrittsdüse 13, 16 befindet sich ein Zwischenspeicher 11 mit einem beweglichen Kolben 12, in den die Kunststoffschmelze gefördert wird, wenn die Nadelverschlußdüse 16 und das Absperrorgan 14 im Bereich der Eintrittsöffnung 21 der Hohlform 20 verschlossen wird. Dies ist dann der Fall, wenn, wie in der Figur 5 gezeigt ist, der Innenraum der Hohlform 20 vollständig mit Kunststoffschmelze angefüllt ist. Sobald eine neue leere Hohlform 20 an die Austrittsdüse 13 angeschlossen ist, wird das im Zwischenspeicher 11 befindliche Kunststoffmaterial zusammen mit der neu vom Extruder 10 geförderten Kunststoffschmelze 24 in den Innenraum der Hohlform 20 gefördert.

Wie in der Figur 5 dargestellt ist, hat sich die Zylinder-Kolben-Einheit 30 zurückbewegt aufgrund des Einfülldruckes der Kunststoffschmelze 24. Ist der Fülldruck erreicht, wird das Absperrorgan 14 geschlossen und die Hohlform 2 von dem Extruder 10 abgeschwenkt, um der mit einem weiteren Pfahl 1 bestückten Hohlform Platz zu machen.

Da u.U. Hohlräume 9 oder Schrumpfnester in der Kunststoffschmelze 24 vorhanden sein können, wird über die Zylinder-Kolben-Einheit 30 der Pfahl 1 in die Hohlform 2 zurückgedrückt, wobei diese Hohlräume 9 geschlossen werden, da die Kunststoffschmelze 24 weder an der Einführöffnung 22 noch an der Einfüllöffnung 21 aufgrund des geschlossenen Absperrorgans 14 austreten kann. Nach Beendigung des Formvorganges verläßt die Hohlform 2 die Formstation A und wird in die Kühlstation B bewegt. Dort wird mittels des Kühlmantels 23 die Kunststoffschmelze abgekühlt, wobei der von der Gegendruckeinrichtung 30 erzeugte Gegendruck aufrechterhalten bleibt.

In der Entformstation C wird der fertig ummantelte Pfahl 1 aus der Form entnommen.

Der Innenraum der Hohlform 20 kann zylindrisch ausgebildet sein, er kann aber auch unterschiedliche Formen aufweisen, so daß die Ummantelung quadratisch, rechteckig, sternförmig oder dergleichen ausgestaltet sein kann.

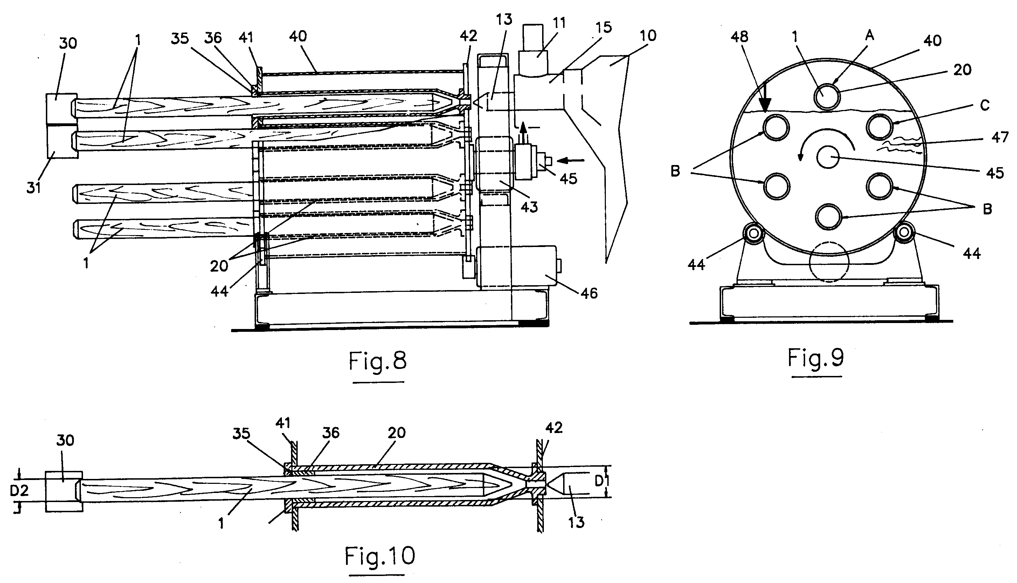

In der Figur 8 ist eine Weiterentwicklung der erfindungsgemäßen Vorrichtung dargestellt, bei der die Hohlformen 20 in einer Trommel 40 angeordnet sind. Wie aus der Figur 9 zu entnehmen ist, sind insgesamt sechs Hohlformen 20 äquidistant in der Trommel 40 angeordnet. Die Holzpfahle 1 mit dem Durchmesser D₂ liegen lose in der mit größerem Innendurchmesser D1 ausgelegten Hohlform 20 (s. Figur 10) und werden durch je einen Abdichtring 35 und eine Kolben-Zylinder-Einheit 30 gehalten und zur Hohlform 20 zentriert. Die Hohlformen 20 sind in Kreisform in der intermittierend über die Antriebseinrichtung 46 angetriebenen Trommel 40 angeordnet, wobei die Einfüllöffnungen der Hohlformen 20 an der zum Extruder 10 gelegenen Seitenwand 42 der Trommel 40 abgedichtet angeflanscht sind, während die anderen offenen Seiten der Hohlformen 20 an der anderen Seitenwand 41 der Trommel ebenfalls abgedichtet befestigt sind. Die Trommellagerung 43 ist einseitig angeordnet, die andere Seite ist durch Stützrollen 44 abgestützt. Die Trommel 40 ist allseitig geschlossen und mit Kühlwasser 47 bis zu einem von außen einregulierbarem Kühlwasserspiegel 48 gefüllt. Der Kühlwasserspiegel 48 wird durch eine nicht-eingezeichtnete Niveauausgleichseinrichtung konstant gehalten.

Durch die Achse 45 der Trommellagerung 43 wird das Kühlwasser 47 durch eine sogenannte Rotorventilaufgabe zugeleitet und zum Wärmeaustausch wieder abgeführt. Verunreinigungen können nicht in das Kühlwasser 47 gelangen.

Der Abdichtring 35 ist jeder Hohlform 20 zugeordnet und an der Seitenwand 41 lösbar befestigt. Er kann auch eine angeformte Hülse 36 aufweisen, die in die Hohlform 20 eingeführt ist und die Ummantelung des Pfahles 1 bei gleicher Länge der Hohlform 20 verkürzen kann (s. Figur 10).

Die Kolben-Zylinder-Einheit 30 kompensiert auch bei dieser Ausführungsform während des Füllvorgangs der Hohlform 20 den Fülldruck. Nach der Formfüllung wird der Holzpfahl 1 durch die Kolben-Zylinder-Einheit 30 in die Hohlform 20 zurückgedrückt, wodurch poröse und Lunkerstellen in der Ummantelung verdichtet und eine Schrumpfkompensation herbeigeführt wird. Der Abdichtring 35 ist als Klemmbackenring ausgebildet und fixiert den Pfahl 1 in seiner Endstellung. Wie in Figur 8 gezeigt ist, kann eine weitere Kolben-Zylinder-Einheit 31 in der nachfolgenden Kühlstation B angeordnet sein, so daß dort ein Nachschieben des Pfahls 1 möglich ist.

Wie aus der Figur 9 zu entnehmen ist, ist die Formstation A oberhalb des Kühlwasserspiegels 48 angeordnet. Dies verhindert ein vorzeitiges Erstarren des die Hohlform 20 füllenden Kunststoffschmelzmaterials. Beim Weiterdrehen gelangt die gefüllte Hohlform 20 in die Kühlstationen B, wo diese vom Kühlwasser 47 umspült und rasch abgekühlt werden.

Die Be- und Entladestation C ist noch im Bereich des Kühlwassers 47 angeordnet. Der Abdichtring 35 wird hier von der Seitenwand 41 gelöst und der ummantelte Holzpfahl 1 kann aus der Hohlform 20 herausgezogen werden. Anschließend wird der Abdichtring 35 über einen weiteren ummantelten Holzpfahl 1 gestülpt und in die freie Hohlform 20 eingeschoben, wobei der Abdichtring wieder an der Seitenwand 41 befestigt wird. Die Zylinder-Kolben-Einheit 30 wird dann in der Füllstation A mit dem Holzpfahl 1 in Eingriff gebracht.

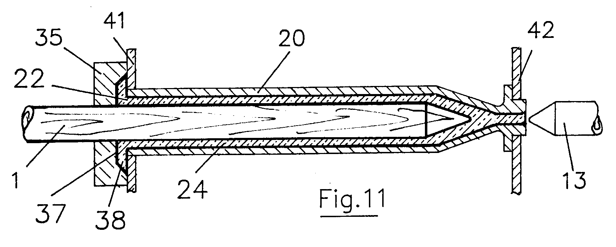

In der Figur 11 ist eine andere Ausführungsform des Dichtrings 35 dargestellt, der zur Herstellung des in Figur 2 gezeigten Tellers 6 am oberen Ende der Ummantelung 4 verwendet wird. Der Dichtring 35 besitzt eine ring- oder tellerförmige Ausnehmung 37, die mit der Außenseite des Seitenwand 41 einen Hohlraum 38 begrenzt. Während des Füllvorgangs fließt die Kunststoffschmelze 24 aus der Einführöffnung 22 heraus in den Hohlraum 38, so daß der spätere Teller 6 an die Ummantelung angeformt ist.

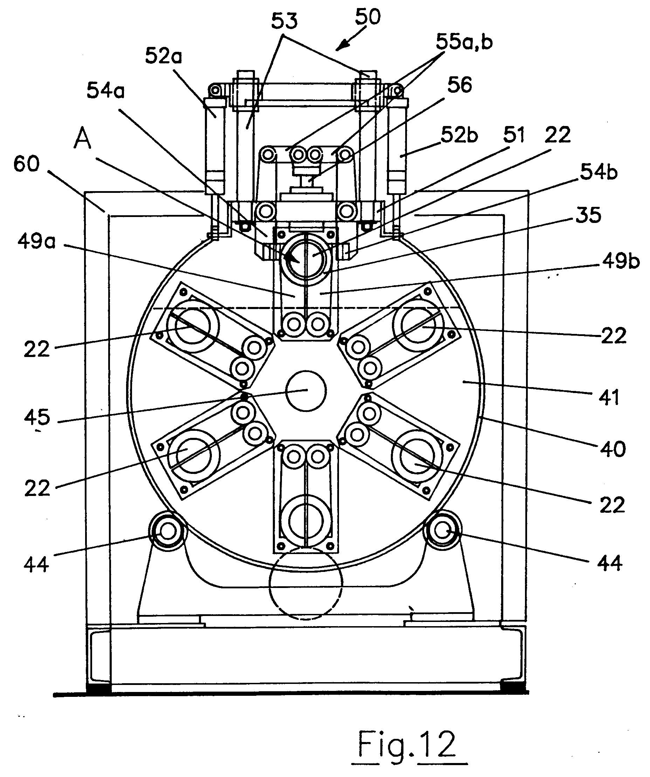

In der Figur 12 ist eine Draufsicht auf die Stirnseite der Trommel 40 dargestellt. In der Seitenwand 41 sind die Einführöffnungen 22 zu sehen, die jeweils von einem zweiteiligen Abdichtring 35 umgeben sind. Die beiden Hälften des Abdichtrings 35 sind in Klemmbacken 49a, b angeordnet, die zur Vorzentrierung des zu ummantelnden Gegenstandes (nicht dargestellt) die beiden Hälften des Abdichtrings 35 gegeneinanderdrücken. In der Einfüllstation A werden die beiden Hälften des Abdichtrings 35 mittels einer Klemmeinrichtung 50 soweit zusammengedrückt, daß der zu ummantelnde Gegenstand fest umschlossen wird. Die Klemmeinrichtung 50 ist an einem die Trommel 40 umgebenden Rahmen 60 montiert und weist zwei Hubzylinder 52a, b auf, die über ein Säulenführungsgestell 53 und eine Platte 51 mit den Andruckbacken 54a, b verbunden sind. Mittels der Hubzylinder 52a, b wird die Klemmeinrichtung 50 in vertikaler Richtung verschoben, so daß die Andruckbacken 54a, b immer dann in den Bereich der Formstation A gesenkt werden können, wenn die Trommel 40 weitergedreht worden ist. Die Andruckbacken 54a, b ergreifen dann die Klemmbacken 49a, b mit den Hälften des Andruckrings 35 und drücken diese gegeneindander. Dies geschieht dadurch, daß auf der Platte 51 ein Spannzylinder 56 angeordnet ist, der über Hebel 55a, b die Andruckbacken 54a, b an ihrem oberen Ende auseinanderdrückt, so daß diese sich aufgrund ihrer drehbaren Lagerung an der Platte 51 im Bereich der Klemmbacken 49a, b aufeinanderzu bewegen. Die gesamte Klemmeinrichtung 50 kann federnd gelagert sein, so daß auch nach dem Fixieren des Gegenstandes über die Klemmeinrichtung 50 ein federndes Zurückweichen des Gegenstandes möglich ist.

### Bezugszeichen:

- 1: Holzpfahl
- 2: Spitze
- 3: Übergangsbereich
- 4: Ummantelung
- 5: Mantelspitze
- 6: Teller
- 7: ringförmige Ausnehmungen
- 8: freies Ende
- 9: Schrumpfnest
- 10: Extruder
- 11: Zwischenspeicher
- 12: Kolben
- 13: Austrittsdüse
- 14: Absperrorgan
- 15: Förderleitung
- 16: Nadelverschlußdüse
- 20: Hohlform
- 21: Eintrittsöffnung
- 22: Einführöffnung
- 23: Kühlmantel
- 24: Kunststoffschmelze
- 30: Zylinder-Kolben-Einheit
- 31: Zylinder-Kolben-Einheit
- 35: Abdichtring
- 36: Hülse
- 37: tellerförmige Ausnehmung
- 38: Hohlraum
- 40: Trommel
- 41: Seitenwand
- 42: Seitenwand
- 43: Trommellagerung
- 44: Stützrollen
- 45: Trommelachse
- 46: Antriebseinrichtung
- 47: Kühlflüssigkeit
- 48: Flüssigkeitsspiegel
- 49a, b: Klemmbacke
- 50: Klemmeinrichtung
- 51: Platte
- 52a, b: Hubzylinder
- 53: Säulenführungsgestell
- 54a, b: Andruckbacken
- 55a, b: Hebel
- 56: Spannzylinder
- 60: Rahmen
- A: Formstation
- B: Kühlstation
- C: Entformstation

## Patentansprüche

1. Verfahren zum Herstellen von verrottungsfesten Gegenständen, wie Pfählen (1), die aus überwiegend verrottbarem Material, wie Holz oder korrodierbaren Metallen, bestehen und die mit einem Teilbereich ins Erdreich oder dergl. oder in ein aggressives Medium eingebracht werden, dadurch gekennzeichnet,
- daß zumindest dieser Teilbereich des Gegenstandes (1) in eine Hohlform (20) eingeschoben wird,
- daß die Hohlform (20) im Bereich ihrer Einführöffnung (22) abgedichtet wird,
- daß in dem Zwischenraum zwischen dem Teilbereich und der Hohlform (20) eine Kunststoffschmelze (24) eingepreßt und dabei in der Hohlform (20) der Gegenstand (1) durch eine Gegenkraft nachgiebig gegen den Einpreßdruck der Kunststoffschmelze (24) gehalten wird, und
- daß die Kunststoffschmelze (24) abgekühlt wird und daß nach Beendigung der Kühlperiode der Gegenstand (1) aus der Hohlform (20) entfernt wird.

2. Verfahren nach Anspruch 1, dadurch gekennzeichnet, daß nach dem Füllen der Hohlform (20) und während der anschließenden Kühlperiode der Gegenstand (1) in die Hohlform (20) zurückgedrückt wird, um eine Schrumpfkompensation herbeizuführen.

3. Verfahren nach Anspruch 1 oder 2, dadurch gekennzeichnet, daß nach dem Befüllen der Hohlform (20) die Eintrittsöffnung (21) verschlossen wird.

4. Verfahren nach einem der Ansprüche 1 bis 3, dadurch gekennzeichnet, daß der in das Erdreich oder dergl. einzubringende Teilbereich des Gegenstandes (1) mit einem geringeren Querschnitt ausgeführt wird, als der Restbereich des Gegenstandes und
daß der Gegenstand (1) so weit in die Hohlform (20) eingeschoben wird, daß der Restbereich die Hohlform (20) im Bereich ihrer Einführöffnung (22) abdichtet.

5. Verfahren nach einem der Ansprüche 1 bis 3, dadurch gekennzeichnet, daß die Hohlform (20) im Bereich ihrer Einführöffnung (22) durch einen den Gegenstand umgreifenden ein- oder mehrteiliger Abdichtring (35) abgedichtet wird.

6. Verfahren nach einem der Ansprüche 1 bis 5, dadurch gekennzeichnet, daß für die Kunststoffschmelze (24) Recyclingmaterial verwendet wird.

7. Verfahren nach einem der Ansprüche 1 bis 6, dadurch gekennzeichnet, daß die von einem Extruder (10) kontinuierlich geförderte Kunststoffschmelze (24) während des Formenwechsels in einen Zwischenspeicher (11) gefördert wird.

8. Verfahren nach Anspruch 7, dadurch gekennzeichnet, daß nach Ankopplung der nächsten leeren Hohlform (20) der Inhalt des Zwischenspeichers (11) zugleich mit der kontinuierlich geförderten Kunststoffschmelze (24) in die bestückte Hohlform (20) gepreßt wird.

9. Vorrichtung zur Herstellung von verrottungsfesten Gegenständen, wie Pfählen (1), die aus überwiegend verrottbarem Material, wie Holz oder korrodierbaren Metallen, bestehen und die mit einem Teilbereich ins Erdreich oder dergl. oder in ein aggressives Medium eingebracht werden, mit einem Extruder (10), der über ein Absperrorgan (14) an mindestens einer Hohlform (20) angeschlossen ist, dadurch gekennzeichnet,
- daß die Hohlform (20) an einer Seite eine Eintrittsöffnung (21) und an der anderen Seite eine Einführöffnung (22) zum Einführen des Gegenstandes (1) aufweist und
- daß gegenüber der Einführöffnung (22) eine Gegendruckeinrichtung angeordnet ist, an der der Gegenstand (1) mit seinem freien Ende (8) anliegt.

10. Vorrichtung nach Anspruch 9, dadurch gekennzeichnet, daß zwischen Extruder (10) und Hohlform (20) ein Zwischenspeicher (11) angeordnet ist.

11. Vorrichtung nach Anspruch 9 oder 10, dadurch gekennzeichnet, daß die Gegendruckeinrichtung eine Zylinder-Kolben-Einheit (30) aufweist.

12. Vorrichtung nach einem der Ansprüche 9 bis 11, dadurch gekennzeichnet, daß die Einführöffnung (22) an die Außerkontur des Gegenstandes (1) angepaßt ist.

13. Vorrichtung nach einem der Ansprüche 9 bis 12, dadurch gekennzeichnet, daß an der Einführöffnung (22) ein ein- oder mehrteiliger Dichtring (35) angeordnet ist.

14. Trommel mit zwischen ihren Seitenwänden (41, 42) angeordneten Hohlformen (20), die zum Befüllen mit Kunststoffschmelze an einem Extruder anschließbar sind, und mit einer Antriebseinrichtung zum Drehen der Trommel, dadurch gekennzeichnet,
daß die Trommel (40) allseits geschlossen und im Innenraum bis zu einem vorbestimmten Flüssigkeitsspiegel (48) mit Kühlflüssigkeit (47) angefüllt ist.

15. Trommel nach Anspruch 14, dadurch gekennzeichnet, daß die Trommel intermittierend angetrieben ist.

16. Trommel nach Anspruch 14 oder 15, dadurch gekennzeichnet, daß die Hohlformen (20) zum Ummanteln von stabförmigen Gegenständen (1) ausgebildet sind.

17. Stabförmiger Gegenstand, insbesondere Pfahl (1) zum Stabilisieren und Anbringen von Weinreben, dessen unterer Teilbereich mit Kunststoff ummantelt ist, dadurch gekennzeichnet,
daß der Querschnitt ohne Ummantelung im unteren Teilbereich gleich dem Querschnitt des nicht-ummantelten Bereichs ist.

18. Gegenstand nach Anspruch 17, dadurch gekennzeichnet, daß der Gegenstand in einer Spitze (5) ausläuft oder eine plane Stirnfläche aufweist.

19. Gegenstand nach Anspruch 17 oder 18, dadurch gekennzeichnet, daß der stabförmige Gegenstand am oberen Ende des unteren Teilbereichs eine ringförmige Ausnehmung (7) aufweist, die mit Kunststoffmaterial angefüllt ist.
